# EUROPEAN PATENT APPLICATION

(11) **EP 4 738 904 A1**
(43) Date of publication of application: **06.05.2026**
(21) Application number: 24850541.4
(22) Date of filing: 29.03.2024
(51) Int. Cl.: H04W 12/08, H04W 12/06

(54) **AUTHENTICATION METHOD, COMMUNICATION DEVICE, AND COMPUTER READABLE STORAGE MEDIUM**

(30) Priority: 04.08.2023 CN 202310986650
(71) Applicant: ZTE Corporation, Shenzhen, Guangdong 518057 (CN)
(72) Inventor: LIU, Peilin, Shenzhen, Guangdong 518057 (CN); YOU, Shilin, Shenzhen, Guangdong 518057 (CN); LIU, Yuze, Shenzhen, Guangdong 518057 (CN); XING, Zhen, Shenzhen, Guangdong 518057 (CN); ZHANG, Leyi, Shenzhen, Guangdong 518057 (CN); MA, Wei, Shenzhen, Guangdong 518057 (CN); LIU, Min, Shenzhen, Guangdong 518057 (CN)
(74) Representative: Ziebig Hengelhaupt Intellectual Property Attorneys Patentanwaltskanzlei PartGmbB
(86) International application number: PCT/CN2024/084950
(87) International publication number: WO 2025/030884

(57) **Abstract**

Provided are an authentication method, a device, and a computer readable storage medium. The method is applied to UDM, and comprises: when a first AMF/SEAF fails to perform primary authentication on a terminal at present, sending a first message to a second AMF/SEAF, wherein the first message is used for instructing the second AMF/SEAF to perform primary authentication on the terminal; and when a second message sent by the second AMF/SEAF is received, sending a third message to the first AMF/SEAF, wherein the second message is used for indicating agreement to perform primary authentication on the terminal, and the third message is used for instructing the first AMF/SEAF to suspend the primary authentication on the terminal.

## Description

The present disclosure claims a priority to Chinese Patent Application No. 202310986650.7, filed on August 4, 2023, the entire content of which is incorporated into the present disclosure by reference.

### TECHNICAL FIELD

The present disclosure relates to the field of communication technologies, and in particular, to an authentication method, a communication apparatus, and a computer-readable storage medium.

### BACKGROUND

During a home network-triggered primary authentication process, the access and mobility management function (AMF)/security anchor function (SEAF), upon receiving the authentication notification message from the unified data management (UDM), will determine whether to perform the primary authentication process based on the AMF/SEAF's own status.

### SUMMARY

In an aspect, there is provided an authentication method, applied to a UDM. The authentication method includes:
sending a first message is sent to a second AMF/SEAF in a case where a first AMF/SEAF is currently unable to perform primary authentication on a terminal, where the first message is used to notify the second AMF/SEAF to perform primary authentication on the terminal;
sending a third message to the first AMF/SEAF in a case where a second message is received from the second AMF/SEAF, where the second message is used to indicate agreement to perform the primary authentication on the terminal, and the third message is used to instruct the first AMF/SEAF to suspend the primary authentication on the terminal.

In another aspect, there is provided an authentication method, applied to a first AMF/SEAF. The authentication method includes:
receiving a third message sent from a UDM in a case where the first AMF/SEAF is currently unable to perform primary authentication on the terminal; where the third message is used to instruct the first AMF/SEAF to suspend primary authentication on the terminal.

In yet another aspect, there is provided an authentication method, applied to a second AMF/SEAF. The authentication method includes:
receiving a first message sent from a UDM, where the first message is used to notify the second AMF/SEAF to perform primary authentication on the terminal;
sending a second message to the UDM to trigger the UDM to send a third message to the first AMF/SEAF in a case where primary authentication on the terminal is supported, where the second message is used to indicate agreement to primary authentication on the terminal; and the third message is used to instruct the first AMF/SEAF to suspend primary authentication on the terminal.

In yet another aspect, there is provided a communication apparatus. The communication apparatus includes a sending module;
the sending module is configured to send a first message to the second AMF/SEAF in a case where the first AMF/SEAF is currently unable to perform primary authentication on the terminal, where the first message is used to notify the second AMF/SEAF to perform primary authentication on the terminal;
the sending module is further configured to, in a case where a second message from the second AMF/SEAF is received, send a third message to the first AMF/SEAF, where the second message is used to indicate agreement to perform primary authentication on the terminal, and the third message is used to indicate the first AMF/SEAF to suspend primary authentication on the terminal.

In yet another aspect, there is provided a communication apparatus. The communication apparatus includes a receiving module;
the receiving module is configured to receive a third message sent from a UDM in a case where the first AMF/SEAF is currently unable to perform primary authentication on the terminal; the third message is used to instruct the first AMF/SEAF to suspend primary authentication on the terminal.

In yet another aspect, there is provided a communication apparatus. The communication apparatus includes a receiving module and a sending module;
the receiving module is configured to receive a first message sent from a UDM, where the first message is configured to notify a second AMF/SEAF to perform primary authentication on the terminal;
the sending module is configured to send a second message to the UDM to trigger the UDM to send a third message to the first AMF/SEAF in a case where primary authentication on the terminal is supported; the second message is used to indicate agreement to perform primary authentication on the terminal; and the third message is used to instruct the first AMF/SEAF to suspend primary authentication on the terminal.

In yet another aspect, there is provided an communication system. The communication system includes a UDM, a first AMF/SEAF and a second AMF/SEAF;
the UDM sends a first message to the second AMF/SEAF in a case where the first AMF/SEAF is currently unable to perform primary authentication on the terminal, where the first message is used to notify the second AMF/SEAF to perform primary authentication on the terminal; the second AMF/SEAF sends a second message to the UDM in a case where primary authentication on the terminal is supported, where the second message is used to indicate agreement to perform primary authentication on the terminal; the UDM sends a third message to the first AMF/SEAF in a case where the second message from the second AMF/SEAF is received, where the third message is used to instruct the first AMF/SEAF to suspend primary authentication on the terminal.

In yet another aspect, there is provided a communication apparatus. The communication apparatus includes a memory and a processor; the memory and the processor are coupled; the memory is configured to store a computer program; the processor implements the authentication method described in any of the above aspects upon executing the computer program.

In yet another aspect, there is provided a computer-readable storage medium. The computer-readable storage medium has stored computer instructions that, upon being run on a communication apparatus, enable the communication apparatus to execute the authentication method according to any one of the above aspects.

In yet another aspect, there is provided a computer program product, the computer program product includes computer program instructions that, upon being executed by a processor, implement the authentication method described in any of the above aspects.

### BRIEF DESCRIPTION OF THE DRAWINGS

In order to describe the technical solutions in the present disclosure more clearly, accompanying drawings to be used in some embodiments of the present disclosure will be introduced briefly below. Obviously, the accompanying drawings to be described below are merely drawings of some embodiments of the present disclosure, and a person of ordinary skill in the art may obtain other drawings according to those drawings.
FIG. 1 is a structural schematic diagram of a communication system, in accordance with some embodiments of the present disclosure.
FIG. 2 is a schematic flowchart of an authentication method, in accordance with some embodiments of the present disclosure.
FIG. 3 is schematic diagram of a home network-triggered primary authentication process, in accordance with some embodiments of the present disclosure.
FIG. 4 is a schematic flowchart of another authentication method, in accordance with some embodiments of the present disclosure.
FIG. 5 is an interaction diagram of yet another authentication method, in accordance with some embodiments of the present disclosure.
FIG. 6 is an interaction schematic diagram of an authentication method, in accordance with some embodiments of the present disclosure.
FIG. 7 is an interaction schematic diagram of another authentication method, in accordance with some embodiments of the present disclosure.
FIG. 8 is an interaction schematic diagram of yet another authentication method, in accordance with some embodiments of the present disclosure.
FIG. 9 is a structural schematic diagram of a communication apparatus, in accordance with some embodiments of the present disclosure.
FIG. 10 is a structural schematic diagram of another communication apparatus, in accordance with some embodiments of the present disclosure.
FIG. 11 is a structural schematic diagram of yet another communication apparatus, in accordance with some embodiments of the present disclosure.
FIG. 12 is a schematic composition diagram of a communication apparatus, in accordance with some embodiments of the present disclosure.

### DETAILED DESCRIPTION

In order to enable the technical personnel in the field to better understand the technical solution of the embodiments of the present disclosure, the technical solutions in the present disclosure will be described clearly and completely with reference to the accompanying drawings in the present disclosure. Obviously, the described embodiments are merely some but not all of embodiments of the present disclosure. All other embodiments obtained based on the embodiments of the present disclosure by a person of ordinary skill in the art without paying any creative effort shall be included in the protection scope of the present disclosure.

It should be noted that in the present disclosure, the words/phrases such as "exemplary" or "for example" are used to present an example, illustration, or explanation. Any embodiment or design solution described with "exemplary" or "for example" in the present disclosure is not necessarily to be construed as preferred or advantageous over other embodiments or design solutions. Rather, the usage of the words/phrases such as "exemplary" or "for example" is intended to present relevant concepts in a specific manner.

Hereinafter, the terms "first", "second", and the like are used for descriptive purposes only and shall not be construed as indicating or implying relative importance or implicitly indicating a number of the indicated technical features. Thus, a feature defined with "first" or "second" may explicitly or implicitly include one or more such features.

In the description of the present disclosure, unless otherwise specified, the symbol "/" means "or", for example, "A/B" may mean A or B. Herein, "and/or" is merely an association relationship for describing associated objects, which represents that there may be three kinds of relationships. For example, "A and/or B" may mean: only A, only B, and both A and B. In addition, "at least one" means one or more, and "a/the of plurality" means two or more.

During the home network-triggered primary authentication process for a terminal/user equipment (UE), after receiving the authentication notification message sent from the UDM, the AMF/SEAF will determine whether to perform the primary authentication process based on its own circumstances (e.g., local authentication policy and terminal status). If the AMF/SEAF is unable to perform the primary authentication process due to some of its own reasons (e.g., functional failure, etc.), the AMF/SEAF sends a response message to the UDM and explains a failure reason; otherwise, the AMF/SEAF may confirm/agree to the above authentication notification message. In the case of confirmation, if the AMF/SEAF cannot access the terminal (i.e., the terminal is unreachable), resulting in the inability to initiate the primary authentication on the terminal at present, the AMF/SEAF will suspend the primary authentication process, that is, set an authentication suspension flag in the terminal context. Once the terminal reconnects to the AMF/SEAF or becomes reachable, the AMF/SEAF will check the authentication suspension flag and re-execute the primary authentication process.

In a multi-registration scenario, the UDM stores information about two AMFs/SEAFs associated with the terminal (e.g., one is an AMF/SEAF complying with the 3rd Generation Partnership Project (3GPP) standard, and the other is an AMF/SEAF complying with a non-3GPP standard). When an AMF/SEAF suspends the primary authentication process, and the terminal subsequently connects to another AMF/SEAF, the new AMF/SEAF may retrieve the UE context from the previous AMF/SEAF, determine that the terminal's primary authentication process is in a suspended state, and re-execute the primary authentication process. Alternatively, when the UDM determines that the previous AMF/SEAF is unable to perform primary authentication, the UDM may notify the new AMF/SEAF to perform primary authentication. When the original AMF/SEAF may perform the primary authentication, there may be a situation where both AMFs/SEAFs perform the authentication process on the terminal, that is, a situation where duplicate authentication occurs. Therefore, how to avoid duplicate authentication on the terminal is a problem that needs to be studied.

Based on this, the embodiments of the present disclosure provide an authentication method, where in a case where a first AMF/SEAF is currently unable to perform primary authentication on the terminal, the UDM may send a first message to a second AMF/SEAF, where the first message is used to notify the second AMF/SEAF to perform primary authentication on the terminal. In a case where a second message sent from the second AMF/SEAF indicating agreement to perform the primary authentication is received, the UDM may send, to the first AMF/SEAF, a third message notifying the first AMF/SEAF to suspend the performance of the primary authentication on the terminal. In this way, when one AMF/SEAF is performing the primary authentication process, the other AMF/SEAF will not perform the primary authentication, thereby effectively avoiding the occurrence of duplicate authentication that may exist in the multi-registration scenario.

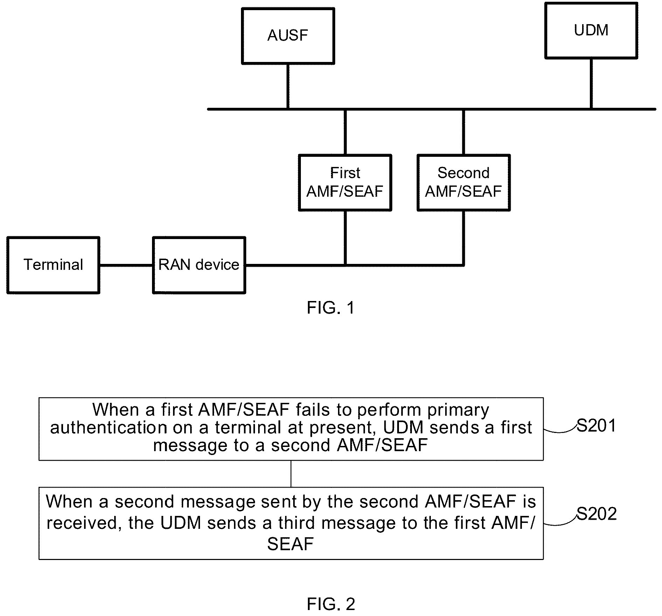

FIG. 1 is a schematic diagram of an architecture of a communication system provided by the embodiments of the present disclosure. As shown in FIG. 1, the communication system includes a terminal, a radio access network (RAN) device, a first AMF/SEAF and a second AMF/SEAF, an authentication server function (AUSF), and a UDM. The terminal may be respectively connect to the two AMFs/SEAFs through the RAN device, and the UDM, AUSF and AMFs/SEAFs are interconnected.

In some embodiments, the terminal may be a device with a wireless transceiving function, such as a mobile phone, a tablet computer, a wearable device, a vehicle-mounted device, an augmented reality (AR)/virtual reality (VR) device, a laptop computer, an ultra-mobile personal computer (UMPC), a netbook, a personal digital assistant (PDA), or the like. The embodiments of the present disclosure do not limit the types of terminals.

In some embodiments, the RAN device can be a base station, where the base station is configured to provide wireless access services to terminals. A base station provides a service coverage area (also known as a cell). Terminals entering this area may communicate with the base station via wireless signals to receive the wireless access services provided by the base station.

In some embodiments, the base station may be a millimeter wave base station, an evolved NodeB (evolution nodeB, eNB), a generation NodeB (gNB), a transmission receive point (TRP), a transmission point (TP), or some other access nodes. Based on the size of the service coverage area provided, the base station may also be classified into a macro base station for providing a Macro cell, a pico base station for providing a Pico cell, and a femto base station for providing a Femto cell. With the continuous evolution of wireless communication technologies, future base stations may also adopt other names.

In some embodiments, the AMF is configured to manage the terminal's registration, connection, access authentication and authorization, mobility and reachability management. SEAF may provide authentication functions for the terminal through the AMF. It should be understood that, unless otherwise specified, AMF and SEAF may be co-located and presented as the same network device externally.

The UDM is configured to store and manage user subscription data and configuration files, is responsible for the actual user's registration and mobility management in the campus network (e.g., which cell the user is actually located in, which AMF/SEAF network element is serving the user, etc.), and stores some confidential subscription information of private network users, and the like.

The AUSF establishes reliable and secure network connections for end users, provides access to its services, and may assist AMF/SEAF in performing the primary authentication process on the terminal.

It should understood that FIG. 1 is an exemplary structural diagram, and a number of devices included in the communication system shown in FIG. 1 is not limited, for example, a number of network devices and a number of terminals are not limited. Furthermore, in addition to the devices shown in FIG. 1, the communication system shown in FIG. 1 may also include other devices, which are not limited herein.

FIG. 2 is a schematic flowchart of an authentication method provided by the embodiments of the present disclosure. For example, the authentication method provided by the present disclosure may be applied to the communication system shown in FIG. 1, and for example, may be applied to the UDM in FIG. 1.

As shown in FIG. 2, the authentication method provided by the present disclosure may include the following S201 to S202.

In S201, in a case where the first AMF/SEAF is currently unable to perform primary authentication on the terminal, the UDM sends a first message to the second AMF/SEAF.

The first message is used to notify the second AMF/SEAF to perform primary authentication on the terminal.

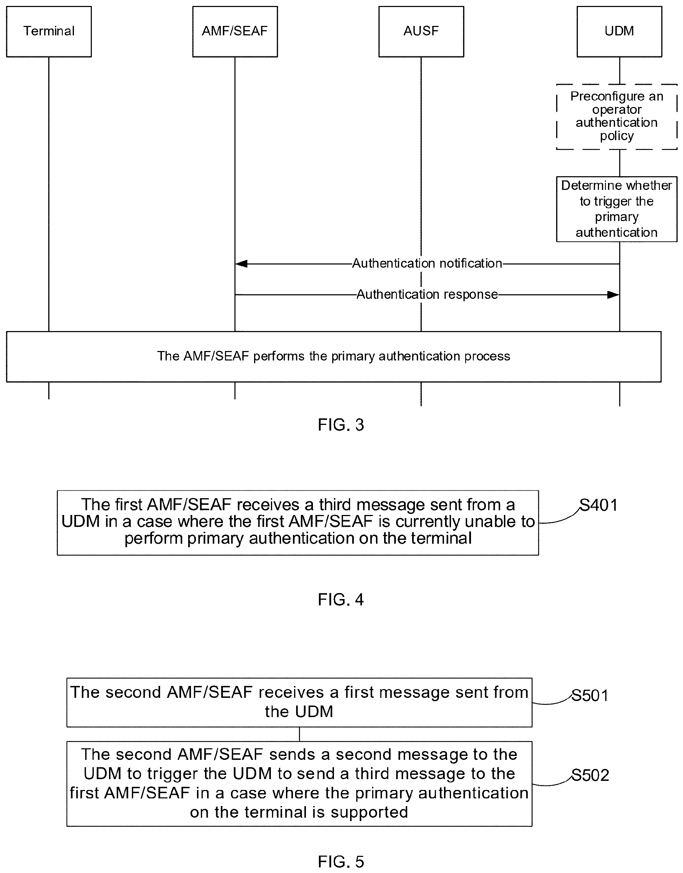

In a case where the terminal performs network registration, the AMF/SEAF is required to complete primary authentication on the terminal to realize network registration. FIG. 3 is a schematic diagram of a home network-triggered primary authentication process provided by the embodiments of the present disclosure, which will be described with reference to FIG. 3.

As shown in FIG. 3, the primary authentication process requires the participation of the terminal, the AMF/SEAF, the AUSF, and the UDM. First, the UDM may determine when to trigger the primary authentication process according to a pre-configured operator identity authentication policy (this operation is optional). When the terminal initiates registration to the network, the AMF/SEAF serving the terminal may initiate terminal registration to the UDM through a registration message (e.g., Nudm_UECM_registration), and the UDM creates an implicit subscription for the AMF/SEAF to subsequently notify the AMF/SEAF to perform any re-authentication process that need to be performed. It should be noted that the prerequisite for triggering the primary authentication in the above process is that the UDM has already stored the information of the AMF/SEAF serving the terminal. For the UDM, the UDM may decide to perform the primary authentication process according to events (e.g., steering of roaming (SoR), UE parameters update (UPU), akma anchor function (AAnF) requests, etc.) or the previously configured authentication policy.

The UDM sends a notification message to the AMF/SEAF with the Subscription Permanent Identifier (SUPI) of the terminal. After receiving the notification message, if the AMF/SEAF is capable of performing the primary authentication process, the AMF/SEAF completes the primary authentication process with the participation of the AMF and UDM.

In some embodiments, if the first AMF/SEAF is unable to perform primary authentication on the terminal due to its own reasons, the UDM may send a first message to the second AMF/SEAF to notify the second AMF/SEAF to perform the primary authentication process instead of the first AMF/SEAF.

It should be noted that the reasons why the first AMF/SEAF is unable to perform primary authentication on the terminal may be a reason of the AMF/SEAF itself in the existing standards (e.g., non-compliance with local authentication policies, functional failures, etc.) or a reason where the terminal's status does not support primary authentication (e.g., the terminal is in a handover state, or the terminal is already in the primary authentication process before receiving the notification from the UDM), or, a reason where the AMF/SEAF may be able to perform the primary authentication process, but the authentication process is suspended because the current terminal is unreachable. In the above scenarios, the first AMF/SEAF may feed back to the UDM an indication that the first AMF/SEAF itself is currently unable to perform primary authentication on the terminal, thereby triggering the UDM to select another AMF/SEAF to perform primary authentication.

In S202, upon receiving a second message sent from the second AMF/SEAF, the UDM sends a third message to the first AMF/SEAF.

The second message is used to indicate agreement to perform primary authentication on the terminal, and the third message is used to instruct the first AMF/SEAF to suspend the primary authentication on the terminal.

In some embodiments, after sending the first message to the second AMF/SEAF, in a case where the UDM receives the second message sent from the second AMF/SEAF and agreeing to perform primary authentication, the UDM may instruct the first AMF/SEAF to suspend primary authentication on the terminal, that is, notify the first AMF/SEAF to temporarily suspend the primary authentication process on the terminal.

FIG. 4 is a schematic flowchart of another authentication method provided by the embodiments of the present disclosure. Exemplarily, the authentication method provided by the present disclosure may be applied to the communication system shown in FIG. 1, for example, may be applied to the first AMF/SEAF in FIG. 1.

As shown in FIG. 4, the authentication method provided by the present disclosure may include the following S401.

In S401, in a case where the first AMF/SEAF is currently unable to perform primary authentication on the terminal, the first AMF/SEAF receives a third message sent from the UDM.

The third message is used to instruct the first AMF/SEAF to suspend primary authentication on the terminal.

In some embodiments, in a case where the first AMF/SEAF is currently unable to perform primary authentication on the terminal (i.e., the first AMF/SEAF has fed back relevant information to the UDM), the first AMF/SEAF may receive a third message from the UDM indicating to suspend authentication, and then suspending the authentication process on the terminal. It should be understood that after receiving the third message (in a state of suspending the authentication process), the first AMF/SEAF will not initiate primary authentication on the terminal even if it is able to complete the primary authentication process.

FIG. 5 is a schematic flowchart of yet another authentication method provided by the embodiments of the present disclosure. Exemplarily, the authentication method provided by the present disclosure may be applied to the communication system shown in FIG. 1, for example, may be applied to the second AMF/SEAF in FIG. 1.

As shown in FIG. 5, the authentication method provided by the present disclosure may include the following S501 to S502.

In S501, the second AMF/SEAF receives a first message sent from the UDM.

The first message is used to notify the second AMF/SEAF to perform primary authentication on the terminal.

In S502, in a case where the primary authentication on the terminal is supported, the second AMF/SEAF sends a second message to the UDM to trigger the UDM to send a third message to the first AMF/SEAF.

The second message is used to indicate agreement to perform primary authentication on the terminal, and the third message is used to instruct the first AMF/SEAF to suspend the primary authentication on the terminal.

For the above S501-S502, the second AMF/SEAF may receive the first message notifying primary authentication sent from the UDM. In a case where the second AMF/SEAF is able to perform primary authentication, the second AMF/SEAF sends a second message to the UDM agreeing to perform primary authentication, thereby triggering the UDM to instruct the first AMF/SEAF to suspend primary authentication on the terminal.

According to the authentication method provided by the embodiments of the present disclosure, the UDM may send a first message to the second AMF/SEAF in a case where the first AMF/SEAF is currently unable to perform primary authentication on the terminal, where the first message is used to notify the second AMF/SEAF to perform primary authentication on the terminal. If receiving a second message sent from the second AMF/SEAF and indicating agreement to perform primary authentication, the UDM may send a third message to the first AMF/SEAF, notifying the first AMF/SEAF to suspend the primary authentication on the terminal. In this way, during the primary authentication process of one AMF/SEAF, another AMF/SEAF will not perform primary authentication, thereby effectively avoiding the occurrence of duplicate authentication in multi-registration scenarios.

The above authentication method will be described in detail below with reference to some embodiments and the drawings in the specification.

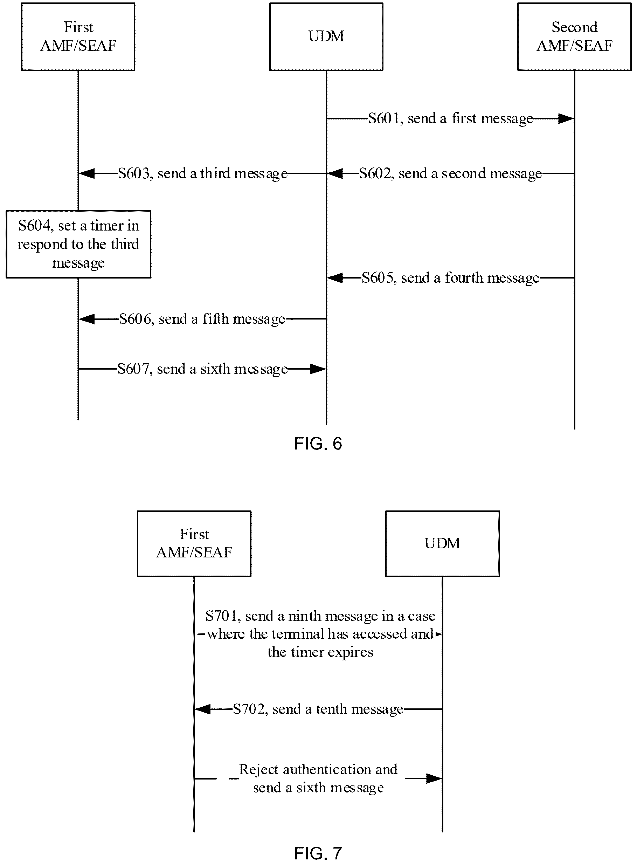

FIG. 6 is an interaction schematic diagram of an authentication method provided by the embodiments of the present disclosure in a case where the second AMF/SEAF supports primary authentication on the terminal, which will be described with reference to FIG. 6.

In S601, in a case where the first AMF/SEAF is currently unable to perform primary authentication on the terminal, the UDM sends a first message to the second AMF/SEAF.

In S602, in a case where the primary authentication on the terminal is supported, the second AMF/SEA sends a second message to the UDM to trigger the UDM to send a third message to the first AMF/SEAF.

In S603, in a case where the second message sent from the second AMF/SEAF is received, the UDM sends a third message to the first AMF/SEAF.

The above S601 may refer to the relevant description of the above S201, the above S602 may refer to the relevant description of the above S502, and the above S603 may refer to the relevant description of the above S202, which will not be repeated herein.

In some embodiments, as shown in FIG. 6, after the above S603, for the first AMF/SEAF, the following is further performed.

In S604, the first AMF/SEAF sets a timer in response to the third message.

After receiving a third message sent from the UDM instructing to suspend primary authentication on the terminal, the first AMF/SEAF may set a timer to count a suspension duration, where the suspension duration is a duration for which the first AMF/SEAF suspends primary authentication on the terminal. It should be noted that even if the terminal has accessed and the authentication process may be performed, the first AMF/SEAF will not perform the authentication process on the terminal in a case where the timer has not expired.

It should be understood that the suspension duration may be determined autonomously by the first AMF/SEAF or instructed by the UDM. In some other embodiments, the third message mentioned above includes a timer parameter, where the timer parameter is used to set the duration for which the first AMF/SEAF suspends primary authentication on the terminal. In this case, the above S604 may be implemented as follows: set the timer based on the timer parameter.

In some embodiments, as shown in FIG. 6, after the above S602, the above authentication method further includes the following S605 to S607.

In S605, the second AMF/SEAF sends a fourth message to the UDM.

The fourth message is used to indicate a result of the primary authentication through the second AMF/SEAF on the terminal.

In S606, in a case where the fourth message is used to indicate that the primary authentication is successful, the UDM sends a fifth message to the first AMF/SEAF.

The fifth message is used to indicate that the primary authentication is successful.

In S607, the first AMF/SEAF sends a sixth message to the UDM.

The sixth message is used to indicate that the first AMF/SEAF resets the authentication suspension flag.

For the above S605-S607, after completing the primary authentication process on the terminal, the second AMF/SEAF may feed back a result of the primary authentication to the UDM, that is, inform the UDM the success or failure of the authentication. In a case where the fourth message indicates the authentication is successful, the UDM may send a fifth message to the first AMF/SEAF to inform the first AMF/SEAF that the primary authentication on the terminal has been successful. The first AMF/SEAF may then reset the authentication suspension flag, or delete the authentication suspension flag set in the terminal context, and inform the UDM that the authentication suspension flag has been reset.

It should be noted that, as mentioned above, the first AMF/SEAF will suspend authentication because the terminal is unreachable. If the terminal reconnects to the first AMF/SEAF later, the first AMF/SEAF will continue to perform the primary authentication process. Based on this, as shown in FIG. 7, the authentication method provided by the embodiments of the present disclosure further includes the following S701-S702 to address the above situation. It should be understood that the operations shown in FIG. 7 may be performed after the above S604.

In S701, in a case where the terminal has accessed and the timer expires, the first AMF/SEAF sends a ninth message to the UDM.

The ninth message is used to request primary authentication on the terminal.

In some embodiments, in a case where the first AMF/SEAF detects that the terminal has accessed (i.e., the terminal is reachable and accessible), the first AMF/SEAF may detect whether the authentication suspension flag exists after the above timer expires. If the authentication suspension flag exists, it indicates that the primary authentication of the terminal may not have been successful, and the first AMF/SEAF may send a ninth message to the UDM to request primary authentication on the terminal. If the suspension flag does not exist, it indicates that the primary authentication of the terminal has ended, and the subsequent process will not be executed.

In S702, the UDM sends a tenth message to the first AMF/SEAF.

The tenth message is used to indicate agreement or refusal to perform primary authentication on the terminal.

In some embodiments, if the UDM still has a primary authentication process on the terminal after receiving the ninth message from the first AMF/SEAF, the UDM may temporarily not respond to the ninth message from the first AMF/SEAF. After the primary authentication process on the terminal ends, the UDM responds to the first AMF/SEAF according to the result of the primary authentication, that is, sends a tenth message.

In some embodiments, if the UDM receives a fourth message sent from the second AMF/SEAF indicating successful primary authentication, the UDM sends a tenth message to the first AMF/SEAF indicating refusal to perform primary authentication on the terminal. Furthermore, the first AMF/SEAF may determine that the primary authentication process on the terminal has ended according to the tenth message, then reset the authentication suspension flag and notify the UDM that the authentication suspension flag has been reset through the sixth message.

In some embodiments, in a case where the UDM receives a fourth message sent from the second AMF/SEAF indicating that the primary authentication fails, the UDM sends a tenth message to the first AMF/SEAF indicating agreement to perform primary authentication on the terminal. Furthermore, the first AMF/SEAF may perform the primary authentication process on the terminal.

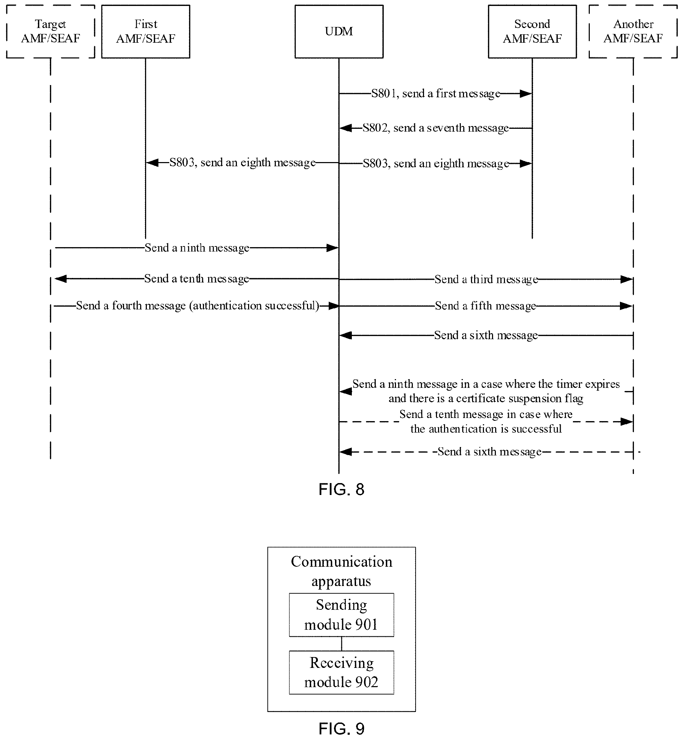

FIG. 8 is an interaction schematic diagram of an authentication method provided by the embodiments of the present disclosure in a case where the second AMF/SEAF does not support primary authentication on the terminal, which will be described with reference to FIG. 8.

In S801, in a case where the first AMF/SEAF is currently unable to perform primary authentication on the terminal, the UDM sends a first message to the second AMF/SEAF.

The relevant description of the above S801 may refer to the above S201 or S601, which will not be repeated herein.

In S802, in a case where the primary authentication on the terminal is not supported, the second AMF/SEAF sends a seventh message to the UDM.

The seventh message is used to indicate that the second AMF/SEAF is currently unable to perform primary authentication on the terminal.

In some embodiments, in a case where the second AMF/SEAF does not support (is unable to) perform primary authentication on the terminal due to its own reasons, the second AMF/SEAF may feed back a seventh message to the UDM to inform the UDM that the second AMF/SEAF itself is currently unable to perform primary authentication on the terminal.

In some embodiments, the seventh message includes first information and/or second information, where the first information is used to indicate that the second AMF/SEAF fails to perform primary authentication on the terminal and a failure reason, and the second information is used to indicate that the primary authentication through the second AMF/SEAF on the terminal is suspended.

It should be noted that the reason why the second AMF/SEAF is unable to perform primary authentication on the terminal may refer to the relevant description of the first AMF/SEAF's inability to perform primary authentication in the above S201, which will not be repeated herein.

In S803, in a case where the seventh message sent from the second AMF/SEAF is received, the UDM sends an eighth message to the first AMF/SEAF and the second AMF/SEAF respectively.

The eighth message includes information about the AMF/SEAF that suspends the primary authentication, for example, the identifier of the AMF/SEAF that has suspended the primary authentication.

In some embodiments, in a case where the seventh message is received, the UDM may determine that neither the first AMF/SEAF nor the second AMF/SEAF is currently able to perform the primary authentication on the terminal and both have suspended the primary authentication process. In this case, the UDM can send an eighth message to both the first AMF/SEAF and the second AMF/SEAF to inform them that both the first AMF/SEAF and the second AMF/SEAF have suspended the primary authentication process.

Continuing with FIG. 8, after S803, if either the first AMF/SEAF or the second AMF/SEAF (e.g., referred to as the target AMF/SEAF) may perform the primary authentication process (the terminal has accessed), it may send a ninth message to the UDM to request primary authentication on the terminal. Furthermore, the UDM may send a tenth message agreeing to authentication to the target AMF/SEAF, and send a third message to another AMF/SEAF to instruct the another AMF/SEAF to suspend primary authentication on the terminal.

Furthermore, if the target AMF/SEAF authentication is successful, the target AMF/SEAF informs the UDM, and the UDM may send a fifth message to another AMF/SEAF to inform the another AMF/SEAF that the primary authentication on the terminal is successful. Another AMF/SEAF may reset the authentication suspension flag and send a sixth message to the UDM to confirm that the authentication suspension flag has been reset.

In addition, after another AMF/SEAF receives the third message from the UDM and suspends the primary authentication on the terminal, if it detects that the terminal has accessed, after the timer expires, another AMF/SEAF detects that the authentication suspension flag exists in the terminal context, and may send a ninth message to the UDM to request primary authentication on the terminal. If the UDM has determined that the target AMF/SEAF has successfully performed primary authentication on the terminal, and then may send a tenth message to another AMF/SEAF to refuse primary authentication. Furthermore, another AMF/SEAF may reset the authentication suspension flag and notify the UDM that the authentication suspension flag has been suspended. If the UDM has determined that the target AMF/SEAF has failed to perform primary authentication on the terminal, the UDM may send a tenth message agreeing to perform primary authentication to another AMF/SEAF, and another AMF/SEAF will then perform the primary authentication process on the terminal. The process of this operation is similar to that shown in the embodiment in FIG. 7. For details, please refer to the relevant description of the embodiment corresponding to FIG. 7, which will not be repeated herein.

According to the authentication method provided by the embodiments of the present disclosure, the UDM may send a first message to the second AMF/SEAF in a case where the first AMF/SEAF is currently unable to perform primary authentication on the terminal, where the first message is used to notify the second AMF/SEAF to perform primary authentication on the terminal. If a second message agreeing to perform the primary authentication and sent from the second AMF/SEAF is received, the UDM may send a third message to the first AMF/SEAF to notify the first AMF/SEAF to suspend the primary authentication on the terminal. In this way, during the primary authentication process of one AMF/SEAF, another AMF/SEAF will not perform primary authentication, thereby effectively avoiding the occurrence of duplicate authentication in multi-registration scenarios.

Furthermore, compared with some technologies where the AMF/SEAF needs to wait for the terminal to access before performing the primary authentication after the primary authentication process is suspended, in the authentication method provided by the present disclosure the UDM may directly instruct another AMF/SEAF to perform the primary authentication process without waiting, which can further effectively improve authentication efficiency. In addition, when both AMFs/SEAFs are currently unable to authenticate, the primary authentication process may be suspended for both AMFs/SEAFs. If one of the AMFs/SEAFs is able to perform the primary authentication process later, the UDM will notify another to suspend the authentication process, which can further prevent duplicate authentication from occurring. Moreover, if one AMF/SEAF fails to authenticate, another AMF/SEAF can perform authentication again, which effectively ensures the success rate of authentication, guarantees that the terminal can normally perform network registration, and improves the user experience.

It should be understood that, to achieve the above functions, the communication apparatus (which may be the aforementioned UDM, the first AMF/SEAF, or the second AMF/SEAF) includes corresponding hardware structures and/or software modules for implementing various functions. Those skilled persons in the art will be easily realize that the present disclosure can be implemented in the form of a hardware or a combination of hardware and computer software in combination with the algorithm steps described in the embodiments of the present disclosure. Whether a certain function is performed through the hardware or the computer software-driven hardware depends on the specific application and restrictive conditions on design of the technical solution. Professional technicians may use different methods to implement the described functions for each specific application, but such implementation should not be considered beyond the scope of the present disclosure.

Embodiments of the present disclosure may divide the communication apparatus into functional modules according to the above method embodiments, for example, may be divided in a way that each functional module corresponds to a respective function, or that two or more functions are integrated into one functional module. The integrated module may be implemented in the form of hardware, or may be implemented in the form of software. It should be noted that the division of the functional modules in the embodiments of the present disclosure is schematic, which is only a logical functional division, and there may be other manners to divide the functional modules in actual implementation. The following description takes dividing each function into a corresponding functional module as an example.

FIG. 9 is a structural schematic diagram of a communication apparatus (the above UDM) provided by the embodiments of the present disclosure, and the communication apparatus may execute the authentication methods provided by the above method embodiments. As shown in FIG. 9, the communication apparatus includes: a sending module 901.

The sending module 901 is configured to send a first message to a second access and mobility management or security anchor function (AMF/SEAF) in a case where the first AMF/SEAF is currently unable to perform primary authentication on a terminal. The first message is used to notify the second AMF/SEAF to perform primary authentication on the terminal.

The sending module 901 is further configured to, upon receiving a second message sent from the second AMF/SEAF, send a third message to the first AMF/SEAF, where the second message is used to indicate agreement to perform primary authentication on the terminal, and the third message is used to instruct the first AMF/SEAF to suspend primary authentication on the terminal.

In some embodiments, the third message includes: a timer parameter, and the timer parameter is used to set a duration for which the first AMF/SEAF suspends primary authentication on the terminal.

In some embodiment, the above apparatus further includes: a receiving module 902. The receiving module 902 is configured to receive a fourth message sent from the second AMF/SEAF, where the fourth message is used to indicate a result of the primary authentication performed by the second AMF/SEAF on the terminal.

In some embodiments, the sending module 901 is further configured to send a fifth message to the first AMF/SEAF in a case where the fourth message is used to indicate that the primary authentication is successful, where the fifth message is used to indicate that the primary authentication is successful.

In some embodiments, the receiving module 902 is further configured to receive a sixth message sent from the first AMF/SEAF, where the sixth message is used to indicate that the first AMF/SEAF resets an authentication suspension flag.

In some embodiments, the sending module 901 is further configured to send an eighth message to the first AMF/SEAF and the second AMF/SEAF respectively, in a case where a seventh message sent from the second AMF/SEAF is received, where the seventh message is used to indicate that the second AMF/SEAF is currently unable to perform primary authentication on the terminal, and the eighth message includes information about the AMF/SEAF that suspends the primary authentication.

In some embodiments, the seventh message includes first information and/or second information, where the first information is used to indicate that the second AMF/SEAF fails to authenticate the terminal and a failure reason, and the second information is used to indicate that the primary authentication on the terminal through the second AMF/SEAF is suspended.

In some embodiments, the receiving module 902 is further configured to receive a ninth message sent from the first AMF/SEAF, where the ninth message is used to request primary authentication on the terminal.

The sending module 901 is further configured to send a tenth message to the first AMF/SEAF, where the tenth message is used to indicate agreement or refusal to perform primary authentication on the terminal.

In some embodiments, the sending module 901 is configured to send a tenth message to the first AMF/SEAF after the fourth message sent from the second AMF/SEAF is received, where the fourth message is used to indicate a result of the primary authentication performed by the second AMF/SEAF on the terminal.

In some embodiments, in a case where the fourth message is used to indicate that the primary authentication is successful, the tenth message is used to indicate refusal to perform primary authentication on the terminal; or, in a case where the fourth message is used to indicate that the primary authentication fails, the tenth message is used to indicate agreement to perform primary authentication on the terminal.

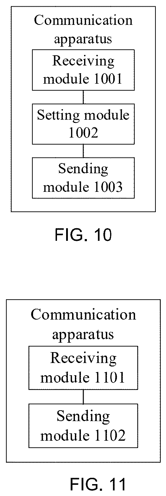

FIG. 10 is a schematic structural diagram of another communication apparatus (the first AMF/SEAF mentioned above) provided by the embodiments of the present disclosure, and the communication apparatus may execute the authentication methods provided by the above method embodiments. As shown in FIG. 10, the communication apparatus includes: a receiving module 1001.

The receiving module 1001 is configured to receive a third message sent from the UDM in a case where the first AMF/SEAF is currently unable to perform primary authentication on a terminal; the third message is used to instruct the first AMF/SEAF to suspend primary authentication on the terminal.

In some embodiments, the above apparatus further includes: a setting module 1002. The setting module 1002 is configured to set a timer in response to the third message, where the timer is used to count a suspension duration, and the suspension duration is a duration for which the first AMF/SEAF suspends the primary authentication on the terminal.

In some embodiments, the third message includes: a timer parameter, and the timer parameter is used to set the duration for which the first AMF/SEAF suspends primary authentication on the terminal; and the setting module 1002 is configured to set the timer based on the timer parameter.

In some embodiments, the receiving module 1001 is further configured to receive a fifth message sent from the UDM, where the fifth message is used to indicate that the primary authentication is successful.

In some embodiments, the above apparatus further includes: a sending module 1003. The sending module 1003 is configured to send a sixth message to the UDM, where the sixth message is used to indicate that the first AMF/SEAF resets the authentication suspension flag.

In some embodiments, the receiving module 1001 is further configured to receive an eighth message sent from the first AMF/SEAF, where the eighth message includes information about the AMF/SEAF that suspends the primary authentication.

In some embodiments, the sending module 1003 is further configured to send a ninth message to the UDM in a case where the terminal has accessed and the timer expires. The ninth message is used to request primary authentication on the terminal. The receiving module 1001 is further configured to receive a tenth message sent from the UDM. The tenth message is used to indicate agreement or refusal to perform the primary authentication on the terminal by the first AMF/SEAF.

FIG. 11 is a schematic structural diagram of yet another communication apparatus (the second AMF/SEAF mentioned above) provided by the embodiments of the present disclosure. The communication apparatus may execute the authentication methods provided by the above method embodiments. As shown in FIG. 11, the communication apparatus includes: a receiving module 1101 and a sending module 1102.

The receiving module 1101 is configured to receive a first message sent from the UDM, where the first message is used to notify the second AMF/SEAF to perform primary authentication on the terminal.

The sending module 1102 is configured to send a second message to the UDM in a case where the primary authentication on the terminal is supported, so as to trigger the UDM to send a third message to the first AMF/SEAF. The second message is used to indicate agreement to perform primary authentication on the terminal; and the third message is used to instruct the first AMF/SEAF to suspend primary authentication on the terminal.

In some embodiments, the sending module 1102 is further configured to send a fourth message to the UDM, where the fourth message is used to indicate a result of the primary authentication performed by the second AMF/SEAF on the terminal.

In some embodiments, the sending module 1102 is further configured to send a seventh message to the UDM in a case where the primary authentication on the terminal is not supported, where the seventh message is used to indicate that the second AMF/SEAF performs primary authentication on the terminal; the receiving module is further configured to receive an eighth message sent from the UDM, where the eighth message includes information about the AMF/SEAF that suspends primary authentication.

In some embodiments, the seventh message includes first information and/or second information, where the first information is used to indicate that the second AMF/SEAF fails to authenticate the terminal and a failure reason, and the second information is used to indicate that the primary authentication through the second AMF/SEAF on the terminal is suspended.

The embodiments of the present disclosure provides a communication system, where the communication system includes a UDM, a first AMF/SEAF, and a second AMF/SEAF. The UDM is configured to execute the methods described in the above S201 to S202, the first AMF/SEAF is configured to execute the methods described in the above S401, and the first AMF/SEAF is configured to execute the methods described in the above S501 to S502.

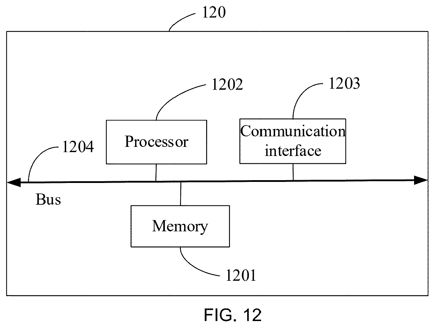

In the case of implementing the functions of the integrated modules described above in the form of hardware, the present disclosure provides another structure of the communication apparatus involved in the above embodiments. As shown in FIG. 12, the communication apparatus 120 includes: a memory 1201, a processor 1202, a communication interface 1203, and a bus 1204.

The memory 1201 may be, but is not limited to, a read-only memory (ROM) or a static storage device of any other type capable of storing static information and instructions, a random access memory (RAM) or a dynamic storage device of any other type capable of storing information and instructions, or an electrically erasable programmable read-only memory (EEPROM), a magnetic disk storage medium or any other magnetic disk storage device, or any other medium capable of being used to carry or store desired program codes and capable of being accessed by a computer, where the desired program codes have instructions or are in the form of data structure, which is not limited thereto.

The processor 1202 may implement or execute various illustrative logical blocks, modules and circuits described in conjunction with the embodiments of present disclosure. The processor 1202 may be a central processing unit (CPU), a general-purpose processor, a digital signal processor (DSP), an application specific integrated circuit (ASIC), a field programmable gate array (FPGA) or any other programmable logic device, a transistor logic device, a discrete hardware component or any combination thereof. The processor 1202 may implement or execute various illustrative logical blocks, modules and circuits described in conjunction with the embodiments of present disclosure. The processor 1202 may also be a combination capable of implementing computing functions, for example, a combination of one or more microprocessors, or a combination of a digital signal processor (DSP) and a microprocessor.

The communication interface 1203 is configured to connect with other devices through a communication network. The communication network may be an Ethernet, a wireless access network, a wireless local area network (WLAN), or the like.

In some embodiments, the memory 1201 may exist independently of the processor 1202, and the memory 1201 may be connected to the processor 1202 through the bus 1204, and is used for storing instructions or program codes. When the processor 1202 calls and executes the instructions or program code stored in the memory 1201, the processor 1202 is capable of realizing the authentication method provided by the embodiments of the present disclosure.

In some embodiments, the memory 1201 may be integrated with the processor 1202.

The bus 1204 may be an extended industry standard architecture (EISA) bus or the like. Buses 1204 may be divided into address buses, data buses, and control buses. For the convenience of representation, only one thick solid line is used in FIG. 12 for representation, which, however, does not mean that there is only one bus or one type of bus.

In some embodiments, the memory 1201 stores executable instructions that, upon being executed by the processor 1202, enable the electronic device or the communication apparatus to perform the authentication method according to any of the above embodiments.

Some embodiments of the present disclosure provide a computer-readable storage medium (e.g., a non-transitory computer-readable storage medium) having stored computer program instructions that, upon being executed by a computer, enable the computer to execute the authentication method as described in any of the above embodiments.

For example, the computer-readable storage medium includes, but is not limited to, a magnetic storage device (e.g., a hard disk, a floppy disk or a magnetic tape), an optical disk (e.g., a compact disk (CD), or a digital versatile disk (DVD)), a smart card and a flash memory device (e.g., an erasable programmable read-only memory (EPROM), a card, a stick or a key driver). The various computer-readable storage media described in the present disclosure may represent one or more devices for storing information and/or other machine-readable storage media for storing information. The term "machine-readable storage media" may include, but are not limited to, wireless channels and various other media capable of storing, containing, and/or carrying instructions and/or data.

The embodiments of the present disclosure provide a computer program product including computer instructions that, upon being run on a computer, enables the computer to execute the authentication method according to any one of the above embodiments.

The foregoing descriptions are merely specific implementations of the present disclosure, but the protection scope of the present disclosure is not limited thereto. Any changes or replacements within the technical scope disclosed by the present disclosure shall be included in the protection scope of the present disclosure. Therefore, the protection scope of the present disclosure shall be determined by the protection scope of the claims.

## Claims

1. An authentication method applied to a unified data management (UDM), **characterized in that** the method comprises:
sending a first message to a second access and mobility management/security anchor function (AMF/SEAF) in a case where a first AMF/SEAF is currently unable to perform primary authentication on a terminal, wherein the first message is used to notify the second AMF/SEAF to perform primary authentication on the terminal;
sending a third message the first AMF/SEAF in a case where a second message is received from the second AMF/SEAF, wherein the second message is used to indicate agreement to perform the primary authentication on the terminal, and the third message is used to instruct the first AMF/SEAF to suspend the primary authentication on the terminal.

2. The method according to claim 1, wherein the third message includes: a timer parameter, and the timer parameter is used to set a duration for which the first AMF/SEAF suspends the primary authentication on the terminal.

3. The method according to claim 1, further comprising:
receiving a fourth message sent from the second AMF/SEAF, wherein the fourth message is used to indicate a result of the primary authentication performed by the second AMF/SEAF on the terminal.

4. The method according to claim 3, further comprising:
sending a fifth message to the first AMF/SEAF in a case where the fourth message is used to indicate that the primary authentication is successful, wherein the fifth message is used to indicate that the primary authentication is successful.

5. The method according to claim 4, further comprises:
receiving a sixth message sent from the first AMF/SEAF, wherein the sixth message is used to indicate that the first AMF/SEAF has reset an authentication suspension flag.

6. The method according to claim 1, further comprising:
sending an eighth message to the first AMF/SEAF and the second AMF/SEAF in a case where a seventh message sent from the second AMF/SEAF is received; the seventh message is used to indicate that the second AMF/SEAF is currently unable to perform the primary authentication on the terminal, and the eighth message includes information about an AMF/SEAF that suspends the primary authentication.

7. The method according to claim 6, wherein the seventh message includes first information and/or second information, wherein the first information is used to indicate that the second AMF/SEAF has failed to authenticate the terminal and a failure reason, and the second information is used to indicate that the primary authentication on the terminal through the second AMF/SEAF is suspended.

8. The method according to claim 1, further comprises:
receiving a ninth message sent from the first AMF/SEAF, wherein the ninth message is used to request the primary authentication on the terminal;
sending a tenth message to the first AMF/SEAF, wherein the tenth message is used to indicate agreement or refusal to perform the primary authentication on the terminal.

9. The method according to claim 8, wherein the sending the tenth message to the first AMF/SEAF comprises:
sending the tenth message to the first AMF/SEAF after a fourth message sent from the second AMF/SEAF is received, wherein the fourth message is used to indicate a result of the primary authentication on the terminal through the second AMF/SEAF.

10. The method according to claim 9, wherein,
in a case where the fourth message is used to indicate that the primary authentication is successful, the tenth message is used to indicate refusal to perform the primary authentication on the terminal; or,
in a case where the fourth message is used to indicate that the primary authentication fails, the tenth message is used to indicate agreement to perform primary authentication on the terminal.

11. An authentication method applied to a first AMF/SEAF, **characterized in that** the method comprises:
receiving a third message sent from a UDM in a case where the first AMF/SEAF is currently unable to perform primary authentication on the terminal; the third message is used to instruct the first AMF/SEAF to suspend the primary authentication on the terminal.

12. The method according to claim 11, further comprising:
in response to the third message, setting a timer, wherein the timer is configured to count a suspension duration, and the suspension duration is a duration for which the first AMF/SEAF suspends the primary authentication on the terminal.

13. The method according to claim 12, wherein the third message includes: a timer parameter, and the timer parameter is used to set the duration for which the first AMF/SEAF suspends the primary authentication on the terminal;
the setting the timer comprises:
setting the timer based on the timer parameter.

14. The method according to claim 11, further comprising:
receiving a fifth message sent from the UDM, wherein the fifth message is used to indicates that the primary authentication is successful.

15. The method according to claim 14, further comprising:
sending a sixth message to the UDM, wherein the sixth message is used to indicate that the first AMF/SEAF has reset an authentication suspension flag.

16. The method according to claim 11, further comprises:
receiving an eighth message sent from the first AMF/SEAF, wherein the eighth message includes information about an AMF/SEAF that suspends the primary authentication.

17. The method according to claim 12, further comprising:
sending a ninth message to the UDM in a case where the terminal has accessed and the timer expires, wherein the ninth message is used to request the primary authentication on the terminal;
receiving a tenth message sent from the UDM, wherein the tenth message is used to indicate agreement or refusal to perform the primary authentication on the terminal.

18. An authentication method applied to a second AMF/SEAF, **characterized in that** the method comprises:
receiving a first message sent from a UDM, wherein the first message is used to notify the second AMF/SEAF to perform primary authentication on the terminal;
sending a second message to the UDM to trigger the UDM to send a third message to a first AMF/SEAF in a case where the primary authentication on the terminal is supported; wherein the second message is used to indicate agreement to perform the primary authentication on the terminal; and the third message is used to instruct the first AMF/SEAF to suspend the primary authentication on the terminal.

19. The method according to claim 18, further comprising:
sending a fourth message to the UDM, wherein the fourth message is used to indicate a result of the primary authentication performed by the second AMF/SEAF on the terminal.

20. The method according to claim 18, further comprising:
sending a seventh message to the UDM in a case where the primary authentication on the terminal is not supported, wherein the seventh message is used to indicate that the second AMF/SEAF is currently unable to perform the primary authentication on the terminal; and
receiving an eighth message sent from the UDM, wherein the eighth message includes information about an AMF/SEAF that suspends the primary authentication.

21. The method according to claim 20, wherein the seventh message includes first information and/or second information, wherein the first information is used to indicate that the second AMF/SEAF has failed to authenticate the terminal and a failure reason, and the second information is used to indicate that the primary authentication through the second AMF/SEAF on the terminal is suspended.

22. A communication apparatus, **characterized by** comprising: a processor and a memory for storing instructions executable by the processor;
wherein the processor is configured to execute the instructions to enable the communication apparatus to execute the authentication method according to any one of claims 1 to 21.

23. A computer-readable storage medium, **characterized in that** the computer-readable storage medium has stored computer instructions that, upon being run on a communication apparatus, enable the communication apparatus to execute the authentication method according to any one of claims 1 to 21.
